# EUROPEAN PATENT APPLICATION

(11) **EP 4 385 371 A1**
(43) Date of publication of application: **19.06.2024**
(21) Application number: 23153921.4
(22) Date of filing: 30.01.2023
(51) Int. Cl.: A47J 31/057, A47J 31/52

(54) **COFFEE BREWING APPARATUS AND METHOD OF OPERATING THE SAME**

(30) Priority: 13.12.2022 WO PCT/CN2022/138686
(71) Applicant: Versuni Holding B.V., 5656 AE Eindhoven (NL)
(72) Inventor: FENG, Xingzhong, 5656 AE Eindhoven (NL); LEE, Chi Yuen, 5656 AE Eindhoven (NL)
(74) Representative: Vollering, Stefanus Franciscus Maria

(57) **Abstract**

Provided is a coffee brewing apparatus (100) having tubing (108) that extends from a one-way valve (106) to a delivery outlet (109). Water is supplied via the delivery outlet into a receptacle (102) for containing coffee grounds. Heating of water in a heatable section (110) of the tubing generates water vapor bubbles. The one-way valve is arranged to restrict backflow, in a direction away from the delivery outlet, so that the heated water comprising water vapor bubbles is transported in the tubing from the heatable section to the delivery outlet. A sensor (120) senses bubbling in water in the tubing between the heatable section and the delivery outlet. This sensor has been found to facilitate control over how much heated water is carried to the receptacle, and accordingly the amount of brewed coffee produced, in a reliable, compact, and relatively low-cost manner. Further provided is a method of operating such a coffee brewing apparatus, and a related computer program.

## Description

### FIELD OF THE INVENTION

This invention relates to a coffee brewing apparatus. The invention further relates to a method of operating such a coffee brewing apparatus, and a related computer program.

### BACKGROUND OF THE INVENTION

Various types of coffee machine are known. One example is a so-called drip coffee machine in which a heating tube is used to boil and pump water to a delivery outlet, e.g. a delivery outlet in the form of a shower head or drip area, arranged above a receptacle containing coffee grounds. The heated water is distributed by the delivery outlet over the coffee grounds, and flows through the coffee grounds. Coffee oil, also called caffeol, is extracted during this coffee brewing process. The brewed coffee may then drip into a coffee pot arranged beneath the receptacle.

In conventional drip coffee machines, all of the water in a water reservoir upstream of the heating tube tends to be heated and delivered to the receptacle to drip through the coffee grounds unless the user manually cuts off the electrical power to the heating tube.

In such conventional drip coffee machines, the strength of the brewed coffee, which partly depends on the quantity of coffee grounds relative to the amount of heated water added thereto, is manually controlled by the user.

In high end coffee machines, a motorized pump and flow meter can be used to control the quantity of water that drips through the coffee grounds. However, such components add complexity and cost to the architecture of such high end coffee machines, and may also increase their size.

### SUMMARY OF THE INVENTION

The invention is defined by the claims.

According to examples in accordance with an aspect of the invention, there is provided a coffee brewing apparatus comprising: a reservoir for holding water; a receptacle for containing coffee grounds; a delivery outlet at which water is supplied into the receptacle; a one-way valve; tubing for carrying water from the one-way valve to the delivery outlet, a heatable section of the tubing being configured such that water in the heatable section is heated to generate water vapor bubbles, and the delivery outlet being at an elevated position, in use, relative to the heatable section, wherein the one-way valve is arranged to permit water transport therethrough from the reservoir towards the heatable section but restrict transport of the heated water comprising said water vapor bubbles from the heatable section back towards the reservoir, the heated water comprising said water vapor bubbles being thereby caused to rise in the tubing from the heatable section to the delivery outlet; a sensor configured to sense bubbling in water in the tubing between the heatable section and the delivery outlet; and a controller configured to: determine, based on sensory data from the sensor, a start of bubbling in the tubing following initiation of power supply to heat the water in the heatable section; and control heated water delivery to the receptacle based on the determined start of bubbling.

The coffee brewing apparatus may operate to transport water to the receptacle in which coffee grounds are receivable due to the heating of the water in the heatable section of the tubing creating a mixture of heated water and water vapor bubbles.

This mixture may be less dense than the water supplied from the reservoir towards the heatable section of the tubing, such that the mixture may be more buoyant than the water being supplied towards the heatable section. This may result in the mixture being carried to up the tubing from the heatable section to the delivery outlet, since the one-way valve restricts, e.g. blocks, flow from the heatable section in the opposite direction towards the reservoir.

The present invention is based, at least in part, on the realization that a sensor configured to sense bubbling in water in the tubing between the heatable section and the delivery outlet can assist to facilitate control over how much heated water is carried to the receptacle, and accordingly the amount of brewed coffee produced, in a reliable, compact, and relatively low-cost manner. This is because the sensor can be used to determine when the bubbling in the water in the tubing begins, and correspondingly the point at which the heated water starts to be transported to the receptacle.

In view of heated water being transportable at a relatively constant flow rate, or at least at a predicable flow rate, the sensor's capability to determine when the bubbling in water begins means that the quantity of water transported to the receptacle is straightforwardly controllable, for example by controlling a duration of heating of the water from the sensed point at which the bubbling in water heated in the tubing starts to occur.

By the controller being configured to control heated water delivery to the receptacle based on the determined start of bubbling, the bubbling sensor-based control of the water transport to the delivery outlet may be automatic.

Initiation of power supply may, for example, refer to initial activation of a heating element when power is supplied thereto so that water is heated in the heatable section.

Such initial activation may be implemented by switching on the coffee brewing apparatus, e.g. via a power switch.

In some embodiments, the sensor comprises a pair of electrodes for contacting the water in the tubing. Such an electrical sensor may provide a convenient, compact, and relatively low-cost way of sensing bubbling in the water heated in the tubing.

In such embodiments, the sensor may be configured to provide a measure of a resistance or current between the pair of electrodes. The sensor providing such a measure of resistance or current between the pair of electrodes may reflect the change, in particular decrease, in electrical resistance of the water resulting from generation of the water vapor bubbles.

The heatable section of the tubing may have an inlet through which water to be heated is deliverable into the heatable section, and an outlet through which heated water exits the heatable section. In such embodiments, the sensor may be arranged to sense bubbling in water exiting the outlet of the heatable section.

Positioning the sensor in this manner, in other words at or proximal to the outlet of the heatable section, may enable reliable sensing of the point at which the heated water starts being transported to the receptacle. Installation of the sensor at such a position may also be relatively straightforward.

In some embodiments, the coffee brewing apparatus comprises a connector member configured to house at least part of the sensor, with the tubing comprising a further tubing section for carrying heated water from the heatable section towards the delivery outlet. In such embodiments, the connector member may connect the heatable section to the further tubing section.

Such a connector member may facilitate installation of the sensor, for example the pair of electrodes, at a position that permits reliable sensing of the point at which the heated water starts to be transported to the receptacle.

In some embodiments, the controller is configured to determine the start of bubbling based on an output of the sensor satisfying a given threshold.

For example a resistance or current threshold may be reached in the case of the electrical sensor. The given threshold may be indicative of the point at which bubbling in the heated water causes the heated water to be transported to the receptacle.

A timer may be included in the coffee brewing apparatus, for example as part of the controller. In such embodiments, the controller may control heated water delivery to the receptacle based on a duration timed by the timer that begins with the determined start of bubbling.

Such a duration, e.g. a pre-set duration, may enable an amount of brewed coffee to be reliably and straightforwardly controlled via the quantity of heated water delivered to the receptacle.

For example, the controller may be configured to control the heating of the water in the heatable section based on the duration timed by the timer that begins with the determined start of bubbling.

In some embodiments, the controller is configured to reduce or stop the power supply that heats the water in the heatable section following completion of the duration. Thus, heated water transport to the receptacle may be ceased.

In some embodiments, the coffee brewing apparatus comprises a user interface configured to enable user input of a desired quantity of brewed coffee to be produced, with the controller being configured to control heated water delivery to the receptacle based on the determined start of bubbling and the user input.

For example, the user input may be used to set the duration timed by the timer that begins with the determined start of bubbling.

In this manner, the quantity of brewed coffee produced by the coffee brewing apparatus need not depend simply on a volume of water in the reservoir, nor on power supply to the heating element being manually terminated by the user.

According to another aspect there is provided a method of operating a coffee brewing apparatus having: a reservoir for holding water; a receptacle for containing coffee grounds; a delivery outlet at which water is supplied into the receptacle; a one-way valve; tubing for carrying water from the one-way valve to the delivery outlet, a heatable section of the tubing being configured such that water in the heatable section is heated to generate water vapor bubbles, and the delivery outlet being at an elevated position, in use, relative to the heatable section, wherein the one-way valve is arranged to permit water transport therethrough from the reservoir towards the heatable section but restrict transport of the heated water comprising said water vapor bubbles from the heatable section back towards the reservoir, the heated water comprising said water vapor bubbles being thereby caused to rise in the tubing from the heatable section to the delivery outlet; and a sensor configured to sense bubbling in water in the tubing between the heatable section and the delivery outlet, the method comprising: determining, based on sensory data received from the sensor, a start of bubbling in the tubing following initiation of power supply to heat the water in the heatable section; and controlling heated water delivery to the receptacle based on the determined start of bubbling.

In some embodiments, and as described above in relation to the coffee brewing apparatus, the sensor comprises a pair of electrodes for contacting the water in the tubing. In such embodiments, the sensory data may comprise a measure of resistance or current between the pair of electrodes.

In some embodiments, the controlling heated water delivery to the receptacle comprises controlling heating of the water in the heatable section.

Alternatively or additionally, the controlling the heated water delivery to the receptacle may be based on a duration that begins with the determined start of bubbling.

In such embodiments, the controlling the heated water delivery to the receptacle may comprise reducing or stopping the power supply that heats the water in the heatable section following completion of the duration.

In some embodiments, the method comprises receiving a user input of a desired quantity of brewed coffee to be produced, with the controlling the heated water delivery to the receptacle being based on the determined start of bubbling and the user input.

For example, the user input, e.g. via a user interface included in the coffee brewing apparatus, may be used to set the duration timed by the timer that begins with the determined start of bubbling.

In this manner, the quantity of brewed coffee produced need not depend simply on a volume of water in the reservoir, nor on power supply to the heating element being manually terminated by the user.

According to a further aspect there is provided a computer program comprising computer program code which, when executed on a computing device having a processing system, causes the processing system to perform all of the steps of the method according to any of the embodiments described herein.

One or more non-transitory computer readable media may be provided, which non-transitory computer readable media have a computer program stored thereon, with the computer program comprising computer program code which is configured, when the computer program is run on the one or more processors, to cause the processing system to implement the method according to any of the embodiments described herein.

The processing system may be, for example, included in the controller of the coffee brewing apparatus described herein.

More generally, embodiments described herein in relation to the coffee brewing apparatus may be applicable to the method and computer program, and embodiments described herein in relation to the method and computer program may be applicable to the coffee brewing apparatus.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a coffee brewing apparatus according to an example;
FIG. 2 provides graphs of heated water volume delivered via tubing vs flow time from a start of bubble build-up in a coffee brewing apparatus according to an example;
FIG. 3 schematically depicts a sensor according to an example;
FIG. 4 provides a perspective view of a water heating and sensing assembly of a coffee brewing apparatus according to an example, with the water heating and sensing assembly being in a partially disassembled state;
FIGs. 5A to 5C provide views of the water heating and sensing assembly shown in FIG. 4 when in an assembled state; and
FIG. 6 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a coffee brewing apparatus having tubing that extends from a one-way valve to a delivery outlet. Water is supplied via the delivery outlet into a receptacle for containing coffee grounds. Heating of water in a heatable section of the tubing generates water vapor bubbles. The one-way valve is arranged to restrict backflow, in a direction away from the delivery outlet, so that the heated water comprising water vapor bubbles is transported in the tubing from the heatable section to the delivery outlet. A sensor senses bubbling in water in the tubing between the heatable section and the delivery outlet. This sensor has been found to facilitate control over how much heated water is carried to the receptacle, and accordingly the amount of brewed coffee produced, in a reliable, compact, and relatively low-cost manner. Further provided is a method of operating such a coffee brewing apparatus, and a related computer program.

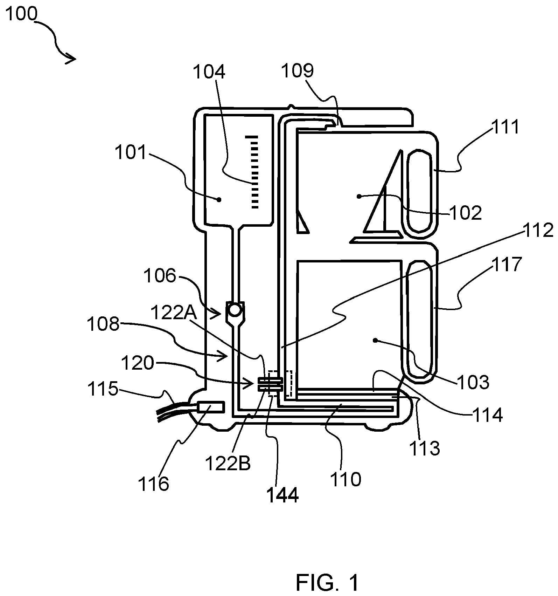

FIG. 1 schematically depicts a coffee brewing apparatus 100 according to an example. The coffee brewing apparatus 100 comprises a reservoir 101 for holding water prior to the water being heated. The heated water is ultimately delivered to coffee grounds contained in a receptacle 102.

A coffee filter (not visible) may be inserted into the receptacle 102, and coffee grounds may be placed on the coffee filter. Such a coffee filter may assist to retain the coffee grounds in the receptacle 102, whilst permitting brewed coffee to pass through the coffee filter.

In some embodiments, such as that shown in FIG. 1, the coffee brewing apparatus 100 comprises a brewed coffee container 103, e.g. a coffee pot, that receives brewed coffee from the receptacle 102.

For example, the brewed coffee container 103 receives brewed coffee that has passed through the coffee filter received in the receptacle 102.

Whilst not visible in FIG. 1, one or more channels for the brewed coffee may extend through a base of the receptacle 102. The brewed coffee may pass from the receptacle 102 via the one or more channels to the brewed coffee container 103.

The reservoir 101 may be delimited by one or more reservoir walls. Such reservoir wall(s) may be formed of any suitable material capable of retaining water within the reservoir 101, such as a plastic material or glass.

In some embodiments, such as that shown in FIG. 1, the reservoir wall(s) is or are made, at least in part, of an optically transmissive material, such as an optically transmissive plastic material or glass, that allows a level of water in the reservoir 101 to be identified.

The optically transmissive reservoir wall(s) may be provided with volume markings 104. Such volume markings 104 are conventionally used as a guide to assist the user in determining how much brewed coffee is produced. In conventional drip coffee machines, all of the water contained in such a reservoir 101 may be delivered to the brewed coffee container 103, unless the user manually cuts off the electrical power supply so as to stop heating of the water while there is still water remaining in the reservoir 101. As will be explained in more detail herein below, the quantity of brewed coffee produced by the coffee brewing apparatus 100 according to the present disclosure need not be determined by the volume of water in the reservoir 101.

The delivery of the heated water is implemented via a one-way valve 106 and tubing 108 that extends from the one-way valve 106 to a delivery outlet 109. The water is heated in a heatable section 110 of the tubing 108, and the heated water is supplied into the receptacle 102 via the delivery outlet 109.

The delivery outlet 109 may be defined by apertures of a perforate plate. Such apertures may distribute the heated water to various regions of coffee grounds contained in the receptacle 102.

It is noted that the perforate plate may be regarded as being included in, or defining, a shower head or drip area from which the heated water is supplied to the coffee grounds contained in the receptacle 102. The heated water may drip from the delivery outlet 109 relatively evenly onto the coffee grounds.

More generally, the delivery outlet 109 may be arranged above the receptacle 102 when an in-use orientation of the coffee brewing apparatus 100 is adopted, such that the heated water falls from the delivery outlet 109 into the receptacle 102, with the brewed coffee dripping from the receptacle 102 down into the brewed coffee container 103 beneath the receptacle 102.

The coffee brewing apparatus 100 can thus be regarded as comprising a so-called "drip coffee machine".

The heated water may flow through the ground coffee beans, picking up their oil essence (coffee oil, released during the roasting process, which is called caffeol) on the way down into the brewed coffee container 103.

The receptacle 102 may be delimited by wall(s) formed of any suitable material capable of withstanding the temperature of the heated water delivered into the receptacle 102 to brew coffee. In some embodiments, the wall(s) delimiting the receptacle 102 are formed from a plastic material.

The receptacle 102 may be funnel-shaped, such that the receptacle 102 tapers in the direction of the brewed coffee container 103, as shown in FIG. 1.

The receptacle 102 may be detachable from the rest of the coffee brewing apparatus 100 so as to facilitate dispensing of coffee grounds into, and removal of used coffee grounds from, the receptacle 102, and, for example, replacement of a coffee filter. To that end, a handle 111 may be provided for assisting the user to detach the receptacle 102.

The water in the reservoir 101 may flow through the one-way valve 106 into the tubing 108 in the direction of the heatable section 110 by gravity.

The water is heated in the heatable section 110 of the tubing 108 to generate water vapor bubbles. In other words, the water in the heatable section 110 is heated up and eventually boils (at 1 atm pressure, sea level, 100°C). This boiling creates bubbles, and thus a pressure to push water flow.

The one-way valve 106 is arranged to permit water transport therethrough from the reservoir 101 towards the heatable section 110 but restrict transport of the heated water comprising the water vapor bubbles from the heatable section 110 back towards the reservoir 101. In other words, passage back to the reservoir 101 is blocked by the one-way valve 106, so that the heated water flows to the delivery outlet 109. It is noted that if there were no one-way valve 106, then the boiling water could flow back into the reservoir 101.

Due to the mixture of heated water and water vapor bubbles being less dense than the water supplied from the reservoir 101, the mixture may be more buoyant than the water being supplied from the reservoir 101 towards the heatable section 110. This may result in the mixture being carried from the heatable section 110, via a further tubing section 112 of the tubing 108, to the delivery outlet 109. This is due to the one-way valve 106 restricting, e.g. blocking, flow from the heatable section 110 in the opposite direction towards the reservoir 101.

With continued boiling of the water, the bubbles may rise in the further tubing section 112, e.g. a vertically extending further tubing section 112.

The internal diameter of the further tubing section 112 may be sufficiently small relative to the size of the bubbles that a column of water can ride upwards to the delivery outlet 109 on top of the bubbles.

Thus, this design obviates the requirement for a motorized pump to transport the heated water to the receptacle 102. The design of the coffee brewing apparatus 100 can therefore be relatively simple and low-cost.

The heatable section 110 of the tubing 108 can be heated in any suitable manner. In some embodiments, such as that shown in FIG. 1, a heating element 113 is arranged to heat the heatable section 110 of the tubing 108.

The heating element 113 is, for example, a resistive heating element 113.

In some embodiments, the heatable section 110 comprises, for example is defined by, a heating tube that includes the heating element 113 as an integral component.

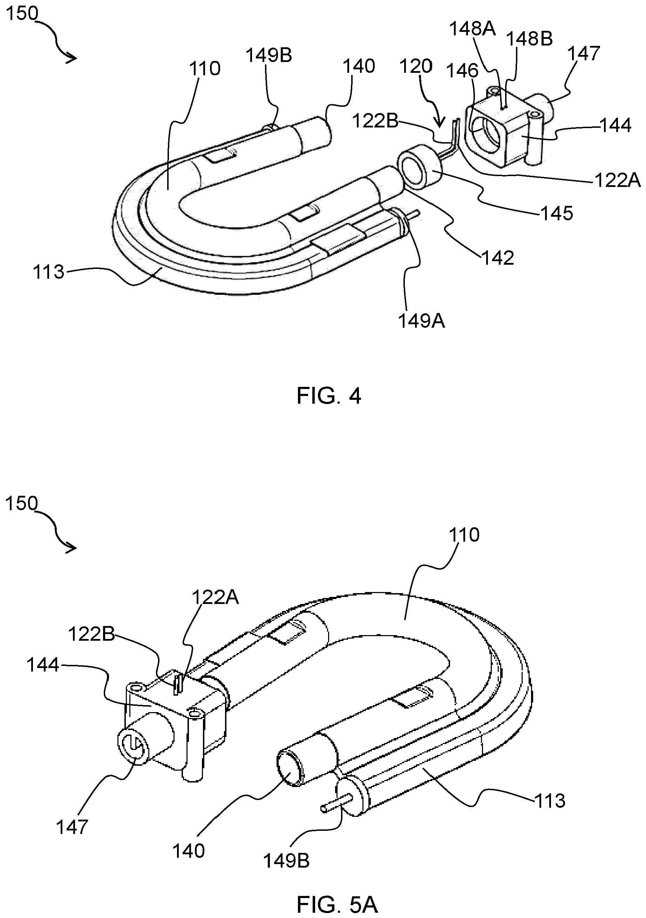

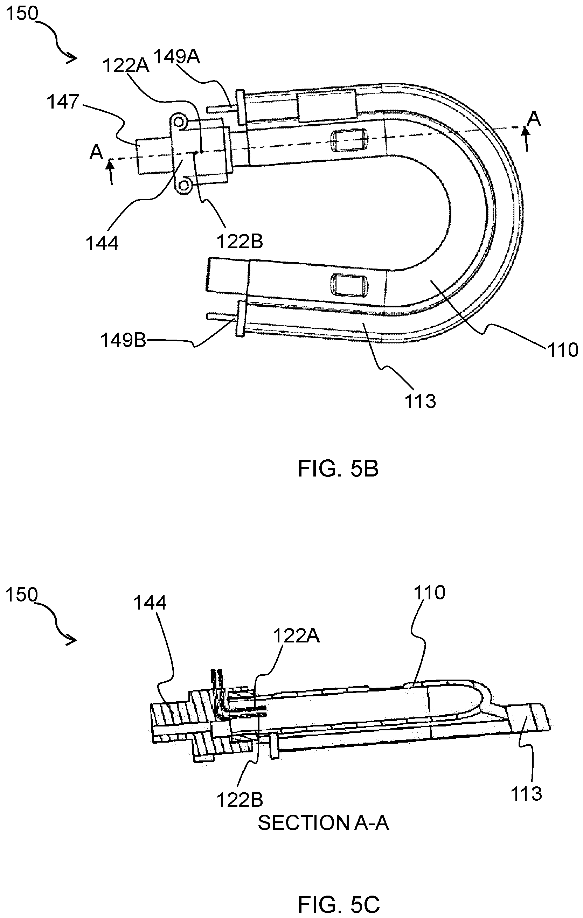

As an example of such a heating tube, a heatable section 110 formed from aluminum tubing is attached, e.g. adhered to, a resistive heating element 113. An illustrative example of such a heating tube will be described below with reference to FIGs. 4 and 5A to 5C.

More generally, the heatable section 110 of the tubing 108 may be formed from any suitable material, such as a metal or metal alloy. By forming the heatable section 110 from such a metal or metal alloy, heat may be efficiently transferred from the heating element 113 to the water inside the heatable section 110.

For example, the heatable section 110 may be formed from aluminium.

It is noted that sections of the tubing 108 upstream and downstream of the heatable section 110, such as the further tubing section 112, can be formed of any suitable material, such as a plastic or elastomeric material.

For example, the sections of the tubing 108 upstream and/or downstream of the heatable section 110, such as the further tubing section 112, can be formed of silicone.

As shown in FIG. 1, the delivery outlet 109 is at an elevated position relative to the heatable section 110 of the tubing 108 when the in-use orientation of the coffee brewing apparatus 100 is adopted. The further tubing section 112 of the tubing 108 may thus extend upwardly from the heatable section 110 to the delivery outlet 109 at the elevated position. In this case, the heated water comprising the water vapor bubbles rises in the further tubing section 112 from the heatable section 110 to the delivery outlet 109.

In at least some embodiments, such as that shown in FIG. 1, the receptacle 102 is arranged above the brewed coffee container 103, with the heatable section 110 of the tubing 108 being arranged proximal, e.g. underneath, the brewed coffee container 103.

Such positioning of the heatable section 110 may enable the heatable section 110 to, in addition to heating the water used for brewing the coffee, heat the brewed coffee container 103, to keep the brewed coffee warm. By the heatable section 110 fulfilling both functions, there may be no need for the coffee brewing apparatus 100 to include an additional heating element dedicated to heating the brewed coffee container 103. This assists to make the design of the coffee brewing apparatus 100 simpler and lower cost.

In some embodiments, such as that shown in FIG. 1, the coffee brewing apparatus 100 includes a heatable plate 114 arranged to heat the brewed coffee container 103 that receives brewed coffee from the receptacle 102. As shown in FIG. 1, the heatable plate 114 may be arranged to support, and heat, the brewed coffee container 103 when the brewed coffee container 103 is placed on the heatable plate 114.

The heatable plate 114 and the heatable section 110 of the tubing 108 may be heated by a common heating element 113, for example by the heating element 113 that is an integral component of the heating tube.

Power may be supplied from a mains source of power to the heating element 113, for example from the mains source of power to the heating element 113 included as an integral component of the heating tube, via a power cable 115.

The coffee brewing apparatus 100 may include an electrical fuse 116 connected between the power cable 115 and the heating element 113.

The brewed coffee container 103 may be delimited by wall(s) made of any suitable material, such as a metallic material and/or glass, such as a borosilicate glass, e.g. Pyrex^{®}. Such materials may assist in transferring heat from the heating element 113, e.g. via the heatable plate 114, to the brewed coffee in the brewed coffee container 103.

In some embodiments, the wall(s) delimiting the brewed coffee container 103 may be vacuum insulated. This may assist the brewed coffee to be kept warm with less, or in some cases without, heating via the heatable plate 114 being required.

The brewed coffee container 103 may be detachable from the rest of the coffee brewing apparatus 100 so as to enable a user to pour brewed coffee therefrom into a cup or other vessel. To that end, a handle 117 may be provided for assisting the user to detach the brewed coffee container 103 and pour the brewed coffee therefrom.

In some embodiments, the heating element 113 may be controlled to heat the brewed coffee container 103, e.g. to keep the brewed coffee therein warm, for a predetermined time period prior to the power supply to the heating element 113 being stopped automatically.

The predetermined time period may be, for example 30 minutes to 1 hour, for example about 40 minutes.

As shown in FIG. 1, the coffee brewing apparatus 100 comprises a sensor 120 configured to sense bubbling in water in the tubing 108 between the heatable section 110 and the delivery outlet 109. This can assist to facilitate control over how much heated water is carried to the receptacle 102, and accordingly the amount of brewed coffee produced, in a reliable, compact, and relatively low-cost manner.

To this end, a controller (not visible) can be configured to determine, based on sensory data from the sensor 120, a start of bubbling in the tubing 108 between the heatable section 110 and the delivery outlet 109 following initiation of power supply to heat the water in the heatable section 110. The controller can further control heated water delivery to the receptacle 102 based on the determined start of bubbling.

The sensor 120 in combination with the controller can be used to determine when the bubbling in the water heated in the tubing 108 begins, and correspondingly the point at which the heated water starts to be transported to the receptacle 102.

Initiation of power supply may, for example, refer to initial activation of the heating element 113 when power is supplied thereto so that the heatable section 110 heats water therein.

Such initial activation may be implemented by switching on the coffee brewing apparatus 100, e.g. by the user actuating a power switch.

In view of heated water being transportable at a relatively constant flow rate, or at least at a predicable flow rate, the capability of the sensor 120 in combination with the controller to determine when the bubbling in water begins means that the quantity of water transported to the receptacle 102 can be reliably and straightforwardly controlled.

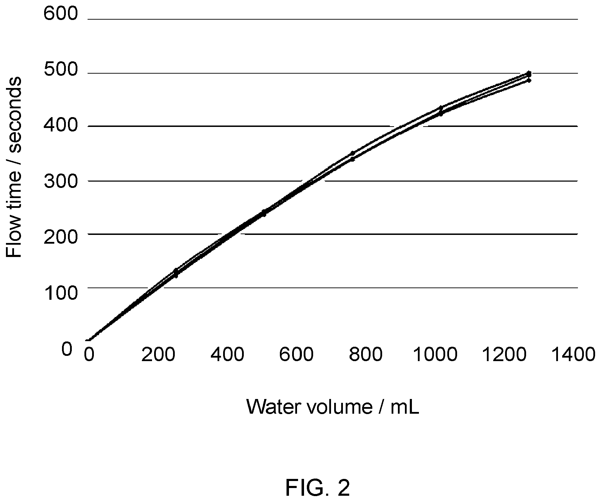

FIG. 2 provides graphs of water volume delivered via the tubing 108 vs flow time from a start of bubble build-up in a coffee brewing apparatus 100 according to an example. The graphs plot measurement data from a coffee brewing apparatus 100 having a resistive heating element 113 included in an aluminium heating tube having an internal diameter of 9 mm. The heating element is powered by a 220 V 50 Hz, 920 W AC power supply. It is noted, still with reference to FIG. 2, that conventional drip coffee machines can provide 1 to 10 cups of brewed coffee, in other words 125 to 1250 ml, with the average flow rate being about 2.552 ml/second.

The graphs provided in FIG. 2 demonstrate that the quantity of water transported to the receptacle 102 is straightforwardly and reliably controllable via a time duration starting from when the bubbling in the water heated in the tubing 108 begins.

A timer may be included in the coffee brewing apparatus 100, for example as part of the controller. In such embodiments, the controller may control heated water delivery to the receptacle 102 based on a duration timed by the timer that begins with the determined start of bubbling in the tubing 108.

Such a duration, e.g. a pre-set duration, may enable an amount of brewed coffee to be reliably and straightforwardly controlled via the quantity of heated water delivered to the receptacle 102.

For example, the controller may be configured to control the heating of the water in the heatable section 110 based on the duration timed by the timer that begins with the determined start of bubbling.

In some embodiments, the controller is configured to reduce or stop the power supply, e.g. to the heating element 113, that heats the water in the heatable section 110 following completion of the duration.

In some embodiments, the coffee brewing apparatus 100 comprises a user interface, such as one or more buttons, a dial, and/or a touchscreen, configured to enable user input of a desired quantity of brewed coffee to be produced, with the controller being configured to control heated water delivery to the receptacle 102 based on the determined start of bubbling and the user input.

For example, the user input may be used to set the duration timed by the timer that begins with the determined start of bubbling. Thus, a longer duration may be timed by the timer when the user desires to produce more, e.g. a larger number of cups of, brewed coffee.

In this manner, the quantity of brewed coffee produced by the coffee brewing apparatus 100 need not depend simply on a volume of water in the reservoir 101, nor on power supply to the heating element 113 being manually terminated by the user.

More generally, the controller can have any suitable design and be arranged in any suitable manner in order to implement the functions described herein.

In at least some embodiments, the controller may comprise a microcontroller unit provided in a coffee machine that is included in the coffee brewing apparatus 100.

Such a microcontroller unit can, for example, be mounted on a printed circuit board assembly included in the coffee machine.

Any suitable type of sensor 120 can be employed to sense bubbling in the tubing 108 between the heatable section 110 and the delivery outlet 109.

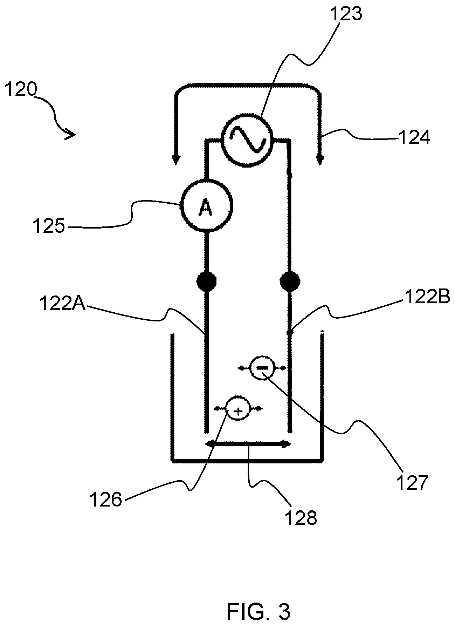

In some embodiments, such as that shown in FIGs. 1 and 3, the sensor 120 comprises a pair of electrodes 122A, 122B for contacting the water in the tubing 108. Such an electrical sensor 120 may provide a convenient, compact, and relatively low-cost way of sensing bubbling in the water heated in the tubing 108.

In such embodiments, the sensor 120 may be configured to provide a measure of a resistance or current between the pair of electrodes 122A, 122B. The sensor 120 providing such a measure of resistance or current between the pair of electrodes 122A, 122B may reflect the change, in particular decrease, in electrical resistance of the water resulting from generation of the water vapor bubbles.

When an electrical resistance at the outlet of the heatable section 110 was measured, using a 9 V multimeter, for the prototype coffee brewing apparatus 100 used to gather the measurement data plotted in FIG. 2, a resistance between the electrodes 122A, 122B was about 1 MS2 prior to the water being heated. When the water was heated up to boiling and the heated water started to flow to the delivery outlet 109, the resistance decreased to about 0.3 MΩ.

With reference to FIG. 3, the sensor 120 may include an AC power supply 123 connected to the pair of electrodes 122A, 122B. The voltage across the electrodes 122A, 122B provided by the AC power supply 123 may be a low voltage for safety reasons. The current is schematically represented in FIG. 3 by the double-headed arrow 124. In this non-limiting example, an ammeter 125 is included in the sensor 120. The circuit is completed by positive ions 126 and negative ions 127 inherently present in the water between the electrodes 122A, 122B. The electrodes 122A, 122B are spaced apart from each other by a distance 128.

In some embodiments, the controller is configured to determine the start of bubbling based on an output of the sensor 120 satisfying a given threshold.

For example, a resistance or current threshold may be reached in the case of the electrical sensor 120. The given threshold may be indicative of the point at which bubbling in the heated water causes the heated water to be transported to the receptacle 102.

It is noted that alternative sensor types can be contemplated for sensing bubbling in the heated water between the heatable section 110 and the delivery outlet 109, such as a vibration sensor 120, e.g. a micro-electromechanical systems (MEMS) vibration sensor 120. Such a vibration sensor 120 may sense vibrations caused by bubbling of the heated water.

In some embodiments, such as that shown in FIGs. 4 and 5A to 5C, the heatable section 110 has an inlet 140 through which water to be heated is deliverable into the heatable section 110, and an outlet 142 through which heated water exits the heatable section 110, with the sensor 120 being arranged to sense bubbling in water exiting the outlet 142 of the heatable section 110.

Positioning the sensor 120 in this manner, in other words at or proximal to the outlet 142 of the heatable section 110, may enable reliable sensing of the point at which the heated water starts being transported to the receptacle 102. Installation of the sensor 120 at such a position may also be relatively straightforward.

Arranging the sensor 120 to sense bubbling in water exiting the outlet 142 of the heatable section 110 can be implemented in any suitable manner.

In some embodiments, and referring to FIGs. 1, 4 and 5A to 5C, a connector member 144 is configured to house at least part of the sensor 120, and the connector member 144 may connect the heatable section 110 to the further tubing section 112. Thus, the connector member 144 can be regarded as an adaptor whose function is partly to enable the heatable section 110 to be fitted to the further tubing section 112.

Such a connector member 144 may facilitate installation of the sensor 120, for example the pair of electrodes 122A, 122B, at a position that permits reliable sensing of the point at which the heated water starts to be transported to the receptacle 102.

As shown in FIG. 4, a seal 145 may be interposed between the connector member 144 and an outlet end of the heatable section 110. The seal 145 may assist to minimize leakage of water between the outlet end of the heatable section 110 and the connector member 144. The seal 145 can be formed of any suitable material, such as an elastomer, e.g. silicone rubber.

The connector member 144 may include a recess 146 in which the outlet end of the heatable section 110 is receivable. In the non-limiting example shown in FIGs. 4 and 5A to 5C, the outlet end of the heatable section 110 is received in the recess 146 of the connector member 144 together with the seal 145.

The connector member 144 may include a connector portion 147 to which the further tubing section 112 is connectable, for example by an end of the further tubing section 112 being sleeved around the connector portion 147.

In embodiments, such as that shown in FIGs. 1, 4 and 5A to 5C, in which the sensor 120 includes the pair of electrodes 122A, 122B, the connector member 144 may delimit holes 148A, 148B through which the electrodes 122A, 122B extend from an outside of the connector member 144 to the inside of the connector member 144. The electrodes 122A, 122B may thus extend to the inside of the connector member 144 where the electrodes 122A, 122B can make contact with the heated water. Outside the connector member 144, the electrodes 122A, 122B may be connected to a sensing circuit of the sensor 120, e.g. a sensing circuit of the type shown in FIG. 3.

It is reiterated that FIGs. 4 and 5A to 5C depict an example in which the heatable section 110 comprises a heating tube that includes the heating element 113 as an integral component.

Evident in FIGs. 4 and 5A to 5C are the electrical connections 149A, 149B by which the heating element 113 can be connected to control circuitry, e.g. the controller. The heating element 113 extends from an electrical connection 149A that is proximal to the outlet end of the heatable section 110 to another electrical connection 149B that is proximal to an inlet end of the heatable section 110.

The water flow rate in heating tubes in production may be difficult to control, for instance due to variation in power, inner diameter, etc., partly due to such heating tubes being a relatively low-cost component. However, the actual appliance water flow rate may be measured during production, and the production fixture may automatically program this data to the controller, e.g. the microcontroller unit.

FIGs. 4 and 5A to 5C can be regarded as depicting a water heating and sensing assembly 150 comprising the heatable section 110, at least part of the sensor 120, and the connector member 144 configured to house the at least part of the sensor 120, e.g. the electrodes 122A, 122B.

The water heating and sensing assembly 150 is shown in FIG. 4 in a partially disassembled state, with the connector member 144 being detached from the heatable section 110, and the at least part of the sensor 120, in this case the electrodes 122A, 122B, being detached from the connector member 144.

The water heating and sensing assembly 150 is shown in FIGs. 5A to 5C in an assembled state with the connector member 144 being attached to the heatable section 110, at the outlet end of the heatable section 110, and with the at least part of the sensor 120, in this case the electrodes 122A, 122B, being housed and mounted within the connector member 144.

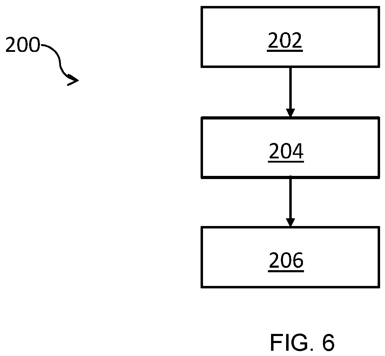

FIG. 6 provides a flowchart of a method 200 according to an example. The method 200 is a method 200 of operating a coffee brewing apparatus 100 according to any of the embodiments described herein.

The method 200 comprises initiating 202 power supply to heat the water in the heatable section 110. The initiating 202 may, for example, be implemented by the user switching on the coffee brewing apparatus 100, e.g. by actuating a power switch.

In step 204, a start of bubbling in the tubing 108 following the initiation 202 of the power supply is determined based on sensory data received from the sensor 120. The method 200 also comprises controlling 206 heated water delivery to the receptacle 102 based on the determined start of bubbling.

In some embodiments, and as described above in relation to the coffee brewing apparatus 100, the sensor 120 comprises a pair of electrodes 122A, 122B for contacting the water in the tubing 108. In such embodiments, the sensory data may comprise a measure of resistance or current between the pair of electrodes 122A, 122B.

In some embodiments, the controlling 206 heated water delivery to the receptacle 102 comprises controlling heating of the water in the heatable section 110.

Alternatively or additionally, the controlling 206 the heated water delivery to the receptacle 102 may be based on a duration that begins with the determined start of bubbling.

In such embodiments, the controlling 206 the heated water delivery to the receptacle 102 may comprise reducing or stopping the power supply, e.g. to the heating element 113, that heats the water in the heatable section 110 following completion of the duration.

In some embodiments, the method 200 comprises receiving a user input of a desired quantity of brewed coffee to be produced, with the controlling 206 the heated water delivery to the receptacle 102 being based on the determined start of bubbling and the user input.

For example, the user input, e.g. via a user interface included in the coffee brewing apparatus 100, may be used to set the duration timed by the timer that begins with the determined start of bubbling.

In this manner, the quantity of brewed coffee produced need not depend simply on a volume of water in the reservoir 101, nor on power supply to the heating element 113 being manually terminated by the user.

A computer program is also provided, which computer program comprises computer program code which, when executed on a computing device having a processing system, causes the processing system to perform steps of the method 200 according to any of the embodiments described herein, and in particular steps 204 and 206. The processing system may be, for example, included in the controller of the coffee brewing apparatus 100.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A coffee brewing apparatus (100) comprising:
a reservoir (101) for holding water;
a receptacle (102) for containing coffee grounds;
a delivery outlet (109) at which water is supplied into the receptacle;
a one-way valve (106);
tubing (108) for carrying water from the one-way valve to the delivery outlet, a heatable section (110) of the tubing being configured such that water in the heatable section is heated to generate water vapor bubbles, and the delivery outlet being at an elevated position, in use, relative to the heatable section, wherein the one-way valve is arranged to permit water transport therethrough from the reservoir towards the heatable section but restrict transport of the heated water comprising said water vapor bubbles from the heatable section back towards the reservoir, the heated water comprising said water vapor bubbles being thereby caused to rise in the tubing from the heatable section to the delivery outlet;
a sensor (120) configured to sense bubbling in water in the tubing between the heatable section and the delivery outlet; and
a controller configured to:
determine, based on sensory data from the sensor, a start of bubbling in the tubing between the heatable section and the delivery outlet following initiation of power supply to heat the water in the heatable section; and
control heated water delivery to the receptacle based on the determined start of bubbling.

2. The coffee brewing apparatus (100) according to claim 1, wherein the sensor (120) comprises a pair of electrodes (122A, 122B) for contacting the water in the tubing (108).

3. The coffee brewing apparatus (100) according to claim 2, wherein the sensor (120) is configured to provide a measure of a resistance or current between the pair of electrodes (122A, 122B).

4. The coffee brewing apparatus (100) according to any one of claims 1 to 3, wherein the heatable section (110) has an inlet (140) through which water to be heated is deliverable into the heatable section, and an outlet (142) through which heated water exits the heatable section, the sensor (120) being arranged to sense bubbling in water exiting the outlet of the heatable section.

5. The coffee brewing apparatus (100) according to any one of claims 1 to 4, comprising a connector member (144) configured to house at least part of the sensor (120), wherein the tubing (108) comprises a further tubing section (112) for carrying heated water from the heatable section (110) towards the delivery outlet (109), the connector member being configured to connect the heatable section to the further tubing section.

6. The coffee brewing apparatus (100) according to any one of claims 1 to 5, wherein the controller is configured to determine the start of bubbling based on an output of the sensor (120) satisfying a given threshold.

7. The coffee brewing apparatus (100) according to any one of claims 1 to 6, comprising a timer, the controller being configured to control heated water delivery to the receptacle (102) based on a duration timed by the timer that begins with the determined start of bubbling.

8. The coffee brewing apparatus (100) according to claim 7, wherein the controller is configured to reduce or stop the power supply that heats the water in the heatable section (110) following completion of the duration.

9. A method (200) of operating a coffee brewing apparatus having:
a reservoir for holding water;
a receptacle for containing coffee grounds;
a delivery outlet at which water is supplied into the receptacle;
a one-way valve;
tubing for carrying water from the one-way valve to the delivery outlet, a heatable section of the tubing being configured such that water in the heatable section is heated to generate water vapor bubbles, and the delivery outlet being at an elevated position, in use, relative to the heatable section, wherein the one-way valve is arranged to permit water transport therethrough from the reservoir towards the heatable section but restrict transport of the heated water comprising said water vapor bubbles from the heatable section back towards the reservoir, the heated water comprising said water vapor bubbles being thereby caused to rise in the tubing from the heatable section to the delivery outlet; and
a sensor configured to sense bubbling in water in the tubing between the heatable section and the delivery outlet, the method comprising:
determining (204), based on sensory data received from the sensor, a start of bubbling in the tubing between the heatable section and the delivery outlet following initiation of power supply to heat the water in the heatable section; and
controlling (206) heated water delivery to the receptacle based on the determined start of bubbling.

10. The method (200) according to claim 9, wherein the sensor comprises a pair of electrodes for contacting the water in the tubing.

11. The method (200) according to claim 10, wherein the sensory data comprises a measure of resistance or current between the pair of electrodes.

12. The method (200) according to any one of claims 9 to 11, wherein said controlling (206) heated water delivery to the receptacle comprises controlling heating of the water in the heatable section.

13. The method (200) according to any one of claims 9 to 12, wherein said controlling (206) the heated water delivery to the receptacle is based on a duration that begins with the determined start of bubbling.

14. The method (200) according to claim 13, wherein said controlling (206) the heated water delivery to the receptacle comprises reducing or stopping the power supply that heats the water in the heatable section following completion of the duration.

15. A computer program comprising computer program code which, when executed on a computing device having a processing system, causes the processing system to perform all of the steps of the method (200) according to any one of claims 9 to 14.
